(19) Europäisches Patentamt
European Patent Office
Office européen des brevets

(11) Numéro de publication : **0 115 726**
**B1**

(12) # FASCICULE DE BREVET EUROPÉEN

(45) Date de publication du fascicule du brevet : **02.03.88**

(51) Int. Cl.$^4$ : **E 21 B 43/25**

(21) Numéro de dépôt : **83402491.1**

(22) Date de dépôt : **20.12.83**

(54) **Compositions améliorées de systèmes polymères, et leurs utilisations notamment pour la fracturation hydraulique.**

(30) Priorité : **21.12.82 FR 8221474**

(43) Date de publication de la demande :
**15.08.84 Bulletin 84/33**

(45) Mention de la délivrance du brevet :
**02.03.88 Bulletin 88/09**

(84) Etats contractants désignés :
**DE GB IT NL**

(56) Documents cités :
**AU-A- 459 573**
**DE-A- 2 058 629**
**US-A- 3 766 984**
**US-A- 3 974 077**

(73) Titulaire : **Etudes et Fabrication Dowell Schlumberger**
**8, rue Bellini**
**F-75782 Paris Cedex 16 (FR)**

(72) Inventeur : **Lemaczyk, Richard**
**18, Avenue Louis Thiollier**
**F-42570 Saint-Heand (FR)**
Inventeur : **Desbrieres, Jacques**
**110 Bld de Fraissinette**
**F-42100 Saint Etienne (FR)**

(74) Mandataire : **Richebourg, Michel François et al**
**Etudes et Fabrication Dowell Schlumberger Z.I.**
**Molina La Chazotte B.P. 90**
**F-42003 Saint-Etienne Cédex 1 (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).



Jouve, 18, rue St-Denis, 75001 Paris, France

**Description**

L'invention concerne le domaine des compositions de systèmes polymères utilisables notamment pour la fracturation hydraulique de formations souterraines voisines d'un puits de forage.

La fracturation hydraulique est une technique utilisée pour augmenter la productivité d'un puits par une augmentation de la conductivité de la formation traitée. On crée une fracture par pompage d'un fluide sous une très forte pression dans la zone considérée. La fracture est ensuite propagée autant que nécessaire par pompage d'une quantité supplémentaire de fluide, le maintien d'une pression suffisante étant alors nécessaire pour lutter contre les contraintes nées de la roche et tendant à refermer la fracture.

Les fluides les plus couramment utilisés dans la fracturation hydraulique sont des solutions aqueuses d'un polymère. Des propriétés importantes de tels fluides sont les suivantes : viscosité élevée, aptitude à transporter l'agent de soutènement (sable, bauxite frittée, ...) dans la fracture, stabilité à la température, et faible perte de charge par frottement durant le pompage, faible perte de fluide dans la formation.

Le polymère le plus couramment utilisé consiste en un polysaccharide (en particulier galactomannane) ou ses dérivés, qui, lorsqu'on le mélange avec certains additifs chimiques, conduit à une composition pouvant être utilisée sur le terrain. Les additifs présents dans de telles compositions déterminent la façon dont le polymère réagira en solution, et par conséquent affecteront les propriétés finales de la solution gélifiée (c'est-à-dire du fluide de fracturation proprement dit).

En régime de mélange continu, dans le traitement des puits peu profonds, ou sous des vitesses de pompage très élevées, il est nécessaire que le temps de gélification soit bref (entre 1 et 2 min), et de plus la composition doit pouvoir être utilisée aussi bien avec de l'eau douce qu'avec une saumure ou de l'eau de mer. De plus, dans les applications de fracturation hydraulique en mer (« offshore »), lorsque l'on ajoute le système polymère à l'eau de mélange, et que l'on effectue immédiatement un pompage, de manière continue, il est nécessaire d'obtenir une hydratation (c'est-à-dire mise en solution) rapide afin que la réticulation se produise avant que le fluide atteigne la fracture.

On utilise des solutions réticulées de galactomannanes dans le domaine des fluides de forage, des fluides de fracturation, pour obturer des formations souterraines, ou dans des compositions aqueuses gélifiées utilisées comme explosifs. On peut utiliser comme agents réticulants un grand nombre d'ions métalliques, par exemple : ions aluminium, arsenic, bore, de métaux de transition, de lanthanides, etc.

Pour obtenir un gel réticulé, deux étapes successives sont nécessaires.

La première étape consiste en l'hydratation de la chaîne macromoléculaire du polymère, c'est-à-dire le « déroulement » de la chaîne polymère depuis une forme initiale en « pelote » jusqu'à une configuration allongée lorsque le polymère est en solution. Ceci est atteint par association des molécules d'eau avec les molécules de polymère, lorsque la gomme est uniformément dispersée dans le milieu aqueux. Le résultat de l'hydratation est un épaississement du solvant. Le temps d'hydratation est défini comme étant le temps nécessaire pour atteindre 90 % de la viscosité maximale du fluide non réticulé.

La seconde étape consiste en la réaction de réticulation. La réticulation d'un polymère consiste en la liaison de macromolécules adjacentes, entre elles, ce qui crée un réseau tridimensionnel. Ceci se traduit par une viscosité très élevée, et par conséquent par les propriétés recherchées de transport de l'agent de soutènement. Le temps de gélification ou réticulation est défini comme étant le temps nécessaire pour atteindre une viscosité Brookfield de 1 000 cP.

L'ordre dans lequel ces deux réactions sont effectuées est très important, et il est impossible que la réticulation se produise avant l'hydratation. Le paramètre permettant de contrôler cet ordre est le pH. Pour les gommes guar et leurs dérivés, l'hydratation est favorisée en milieu légèrement acide, tandis que le domaine de pH convenant à la réticulation dépend de l'agent de réticulation métallique. En fonction du pH de la solution, on peut obtenir des gels « souple » ou « dur », au terme de temps de réaction qui peuvent varier dans un large domaine.

Si les systèmes considérés doivent être utilisés par la technique de mélange en continu, il est nécessaire d'introduire des tampons afin de permettre que l'hydratation et la réticulation se produisent dans l'ordre correct : pour les dérivés de gomme de guar, un tampon acide permet à l'hydratation de se produire, et la réticulation ultérieure se produit lorsque le milieu devient basique grâce à l'action d'une base à action retardée (lorsque l'on utilise un agent de réticulation du type borate).

On sait donc utiliser pour la fracturation hydraulique des dérivés de polysaccharides auxquels on fait tout d'abord subir une hydratation pour modifier la conformation des chaînes de polymère initialement en pelote, puis une réticulation (par un agent réticulant tel qu'un ion borate, de titane, de zirconium, etc.) afin d'obtenir un gel présentant à la fois des caractéristiques suffisantes de fluidité et des caractéristiques suffisantes d'élasticité, capable de bien porter les agents de soutènement.

Les compositions actuelles comportent quatre constituants.

Le premier constituant consiste en le polymère, généralement une gomme guar hydroxy-propylée (dérivé de polysaccharide, ou « PSD »).

Le second constituant consiste en un agent réticulant tel que défini ci-dessus.

Le troisième constituant consiste en un tampon capable d'abaisser le pH jusqu'à un pH légèrement acide, de l'ordre de 4, 5, de manière à permettre l'hydratation durant une période qui ne dépasse pas 1 min. On utilise de manière très courante un tampon acide constitué d'un mélange d'acide citrique et d'un acétate, de manière connue.

Le quatrième constituant consiste en une « base retardée », c'est-à-dire une base dont l'action est retardée par le fait qu'elle se dissout très lentement dans le milieu aqueux. Ce quatrième constituant permet d'atteindre un pH 8,5 après environ 3 min, ce qui provoque la réticulation puisque celle-ci débute aux environs de pH 8, et se développe pour les valeurs supérieures à pH 8.

Un tel système est notamment décrit dans le brevet des Etats-Unis d'Amérique US-A-3 974 077 et le brevet Australien AU-459 573. Un système voisin, mais de propriétés différentes car adapté au colmatage de formations et non à la fracturation, est encore décrit dans le brevet des Etats-Unis d'Amérique n° 3 766 984.

On connaît deux types principaux de mise en œuvre de telles compositions.

La première technique est un procédé en discontinu (« batch process ») qui consiste à utiliser successivement, en discontinu, les compositions préparées elles-mêmes en discontinu. Une telle technique nécessite des cuves très importantes, étant donné qu'il faut environ 400 $m^3$ de gel pour un traitement moyen. De tels réservoirs sont par exemple incompatibles avec l'utilisation offshore.

La seconde technique consiste en un procédé de « pompage en continu » selon lequel on pompe l'eau disponible sur place, on mélange à cette eau en continu les quatre constituants précisés ci-dessus, prémélangés, puis certains additifs tels que anti-moussants, etc., et on pompe en continu dans la même opération le mélange réactif dans le puits. On voit donc que l'on dispose d'un temps très court pour atteindre la gélification, puisque ce n'est qu'à partir du moment où la gélification est sensiblement terminée que le produit est efficace. On remarquera que ce temps disponible pour atteindre la gélification sera d'autant plus bref que le puits sera peu profond ou la vitesse de pompage élevée.

Dans certaines applications, les produits que l'on connaît actuellement conduisent à un temps de gélification qui est trop long.

Le temps de gélification est encore augmenté si on utilise de l'eau de mer ou une saumure.

Selon la présente invention, on ajoute un agent chélatant aux quatre constituants connus, cet agent chélatant étant différent des constituants du tampon acide et choisi parmi les composés contenant au moins un groupe —COOH, de préférence deux groupes —COOH, de préférence voisin(s) d'une double liaison, et la thiourée, à raison de 2-10 % par rapport au poids du polymère.

On obtient ainsi une nouvelle composition pour gel, basée sur le même polymère de base, les additifs chimiques et les proportions utilisées ayant toutefois été modifiées, la modification essentielle résidant dans l'adjonction d'un agent chélatant.

On a découvert selon la présente invention que l'on pouvait utiliser comme agents chélatants des composés comportant au moins un groupe —COOH, de préférence deux groupes —COOH, de préférence voisin(s) d'une double liaison, comme par exemple l'acide fumarique ou maléique. On a obtenu les meilleurs résultats avec l'acide maléique. On peut également utiliser, bien qu'ils soient moins efficaces, des acides de la famille de l'acide isoascorbique (ou acide érythorbique).

De tels acides n'ont jamais été utilisés pour favoriser la réticulation d'un polymère.

Bien au contraire, le brevet des Etats-Unis d'Amérique n° 4 317 735 préconise l'emploi de l'acide érythorbique pour inhiber la réticulation de gommes du type xanthanne à un pH supérieur à environ 1,5 en présence d'ions ferriques.

Gammes de concentration des différents additifs, dans les compositions selon l'invention : (les concentrations indiquées sont rapportées à la concentration de polymère)

| | |
|---|---|
| acide citrique | 2 à 10 % |
| citrate de trisodium dihydraté | 0 à 6,25 % |
| dihydrogénophosphate de sodium dihydraté | 0 à 6,25 % |
| agent chélatant différent de l'acide citrique/citrate (notamment acide maléique) | 2 à 10 % |
| oxyde de magnésium | 8 à 30 % |

Pour obtenir un bon compromis entre l'hydratation du polymère, le temps de gélation et de bonnes propriétés rhéologiques du gel, une valeur minimale du rapport acide : oxyde de magnésium égale à 20 % en poids est nécessaire.

Le choix des agents chélatants selon l'invention s'est révélé être difficile, car l'additif recherché ne devait pas interférer avec la solubilisation de la base retardée, et devait être lui-même actif aussi bien en milieu acide qu'en milieu basique. En effet, nous avons vu plus haut que le milieu réactionnel devait tout d'abord être acide puis basique. Si les propriétés de l'agent chélatant ne se développaient qu'en milieu basique, cet agent n'aurait pas le temps d'agir suffisamment. Il a donc été nécessaire de rechercher des additifs capables d'être actifs non seulement dans le domaine basique, mais déjà dans le domaine acide.

La présence d'au moins un groupe —COOH est indispensable. Ainsi, des agents chélatants comme les oximes tels que le diméthylglycoxime de formule :

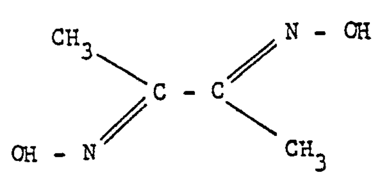

ou des aminoalcools comme la triéthanolamine : $N(CH_2—CH_2OH)_3$ ne conviennent pas. L'exemple de la triéthanolamine est particulièrement frappant à cet égard car l'acide nitrilotriacétique : $N(CH_2—COOH)_3$, lui, convient.

On trouvera dans le tableau I ci-après la formule des agents chélatants préférés selon l'invention.

On remarque que la thiourée donne également de bons résultats, sans doute en raison du groupe C = S.

La figure 1 représente des courbes d'évolution de la viscosité en fonction du temps, et fait clairement ressortir l'intérêt de l'ajout de certains agents chélatants, notamment d'acide maléique, et au contraire l'action néfaste de la triéthanolamine.

La figure 2 représente également des courbes viscosité/temps pour trois exemples précis de réalisation de l'invention.

La formulation générale des compositions utilisées de manière courante dans le procédé en continu est conservée selon l'invention, c'est-à-dire que les formulations selon l'invention comprennent également un agent de gélification, un tampon acide pour permettre l'hydratation, une base retardée pour permettre la réticulation. Cependant, on a modifié les quantités relatives de ces constituants, et on a ajouté un constituant essentiel constitué par l'agent chélatant décrit ci-dessus.

Grâce à cet agent chélatant, on améliore à la fois les caractéristiques de vitesse de gélification et les caractéristiques de viscosité finale du gel. Ces améliorations sont particulièrement sensibles lorsque l'on utilise de l'eau salée ou des saumures concentrées par exemple en ions divalents calcium, magnésium, etc.

Les améliorations précitées sont de l'ordre de 30 à 40 %, ce qui est tout à fait considérable, et surprenant.

L'invention permet donc d'ouvrir de nouveaux domaines d'application aux compositions pour fracturation dont le principe est connu de manière générale.

Ces nouveaux domaines d'application sont essentiellement le domaine offshore et celui des zones où on ne dispose que d'eau salée ou d'une saumure.

Le gel réticulé obtenu selon l'invention pourra être cassé par les mêmes agents oxydants ou enzymes que ceux utilisés habituellement.

Les avantages de l'invention peuvent être résumés de la manière suivante :

temps de réticulation beaucoup plus court qu'avec les produits connus (1 min à la température ambiante dans l'eau de mer, au lieu de 3 à 4 min environ) ;

formulation unique pouvant être utilisée indifféremment avec de l'eau douce, une saumure, ou de l'eau de mer ;

développement de la réaction de réticulation quel que soit le pH initial, le taux de salinité de l'eau utilisée pour réaliser le mélange, la nature des ions contenus dans cette eau ;

caractéristique améliorée de transport de l'agent de soutènement, notamment durant le début de la gélification ; et

possibilité d'utiliser plusieurs agents réticulants métalliques, quelle que soit l'eau de mélange utilisée.

Les exemples suivants illustrent l'invention sans toutefois en limiter la portée.

Procédure de mélange et d'étude viscométrique.

L'eau de mélange (solution à 1 % de chlorure de potassium ou eau de mer ASTM D 1141-75) est agitée dans un agitateur type « waring blendor » (commercialisé par CHANDLER ENGINEERING Co, TULSA, USA) équipé d'un tachymètre digital. La vitesse de rotation initiale du moteur est de 6 000 tr/min. L'agent réticulant est ajouté en solution à l'eau de mélange, puis le système polymère sous forme solide est additionné au temps t = 0 (il peut être possible d'ajouter l'agent réticulant sous forme pulvérulente en même temps que l'agent gélifiant). La solution est agitée durant 1 min (on laisse la vitesse de rotation du moteur chuter) puis l'agitation est stoppée.

La solution est transvasée très rapidement dans la cellule d'un consistomètre atmosphérique. Cet appareil est généralement utilisé pour étudier la consistance et le temps de prise d'un laitier de ciment (la description complète de cet appareil avec les cotes des différents composants est dans la norme API RP1OB). La géométrie de la palette utilisée diminue l'influence des effets secondaires tels que l'effet Weissenberg ou l'effet de glissement.

Exemples 1 à 24 : Emploi de l'acide maléique

On a préparé et testé par la technique ci-dessus les compositions détaillées dans le tableau III ci-après.

Le polymère utilisé est le « PSD » ci-dessus.

Ce tableau présente également les résultats viscosimétriques obtenus.

La figure 2 traduit l'évolution de ces résultats en fonction du temps, pour les exemples 2, 18 et 24.

Exemple 25

On a utilisé différents agents chélatants.

La formulation utilisée et les résultats obtenus sont rassemblés dans le tableau II ci-après.

Exemple 26 : Gamme de concentration des différents sels contenus dans l'eau de mélange

La formulation du système polymère employé est celle citée dans l'exemple 24.

Les différentes gammes de concentration des sels contenus dans l'eau de mélange pour lesquelles des tests ont été effectués sont les suivantes :

$Ca^{2+}$ : 0 à 0,2 mole/l (0 à 25 g/l de $CaCl_2$, 2 $H_2O$)
$Mg^{2+}$ : 0 à 0,15 mole/l (0 à 25 g/l de $MgCl_2$, 2 $H_2O$)
$HCO_3^-$ : 0 à 0,01 mole/l (0 à 1 g/l de $NaHCO_3$)
KCl : 0 à 150 g/l
NaCl : 0 à 150 g/l

Les résultats restent excellents au moins jusqu'aux limites supérieures ci-dessus.

Tableau I

Formule des principaux agents chélatants utilisables selon l'invention

composés ayant un groupement ène 1,2-dicarboxylique
(les groupements « cis » ont une efficacité supérieure aux groupements « trans »)

acide maléique

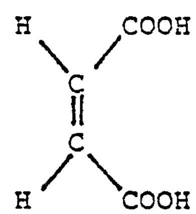

acide fumarique

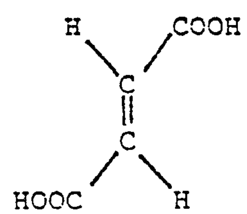

acide orthophtalique

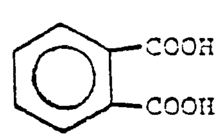

acides hydroxycarboxyliques

acide tartrique

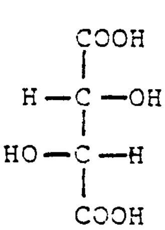

acide citrique

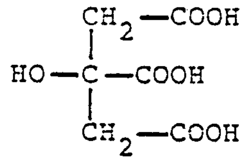

acide sulfosalicylique (ou hydroxy 2-carboxy 1-benzènesulfonique 5)

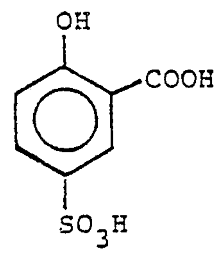

acide isoascorbique (ou érythorbique)

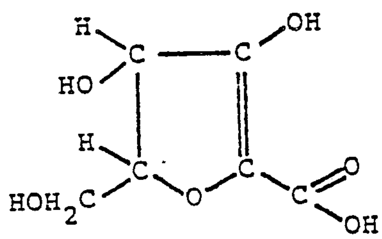

thiourée $(NH_2)_2\ C = S$

acides aminocarboxyliques

E.D.T.A. (acide éthylène diamine tétraacétique)

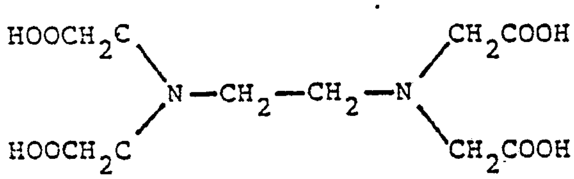

N.T.A. (acide nitrilotriacétique)

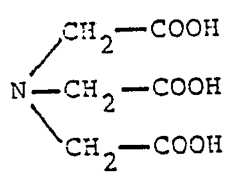

Tableau II

Comparaison des différents agents chélatants

Eau de mélange : eau de mer A.S.T.M., T = 25 °C.
Concentration des différents constituants :

| | |
|---|---|
| polymère | 74 % |
| acide citrique | 3,85 % |
| citrate de trisodium dihydraté | 1,5 % |
| dihydrogénophosphate de sodium dihydraté | 1,5 % |
| oxyde de magnésium | 15,3 % |
| agent chélatant | 3,85 % |

| Agent chélatant | Temps pour obtenir une viscosité de 1 000 cP (m Pas) | Temps pour obtenir une viscosité de 5 000 cP (m Pas) |
|---|---|---|
| Acide maléique | 1 min 15 s | 2 min 45 s |
| Acide fumarique | 3 min | 4 min 45 s |
| Acide tartrique | 2 min 45 s | 3 min 55 s |
| Acide sulfosalicylique | 3 min | 3 min 55 s |
| Thiourée | 2 min 45 s | 4 min |
| E.D.T.A. | 3 min 30 s | 5 min |
| Diméthylglyoxime | 4 min | Jamais obtenue |
| Triéthanolamine | 4 min 15 s | Jamais obtenue |
| Pas d'agent chélatant | 3 min | 10 min |

Tableau III

| Exemples | Polymère (g) | Acide citrique (g) | Citrate de sodium | Hydrogéno-phosphate de sodium | Oxyde de magnésium (g) | Acide maléique (g) | Temps pour obtenir 1 000 cP (m Pas) | Temps pour obtenir 5 000 cP (m Pas) |
|---|---|---|---|---|---|---|---|---|
| 1 | 2,4 | 0,105 | 0,1 | 0,08 | 0,5 | 0,1 | 3 min | 4 min 30 s |
| 2 | 2,4 | 0,025 | 0,05 | 0,05 | 0,5 | 0,025 | 7 min | Jamais obtenue |
| 3 | 2,4 | 0,075 | 0,1 | 0,08 | 0,5 | 0,075 | | |
| 4 | 2,4 | 0,05 | 0,1 | 0,08 | 0,5 | 0,05 | 2 min 20 s | 4 min 45 s |
| 5 | 2,4 | 0,15 | 0,1 | 0,08 | 0,5 | 0,15 | | |
| 6 | 2,4 | 0,20 | 0,1 | 0,08 | 0,5 | 0,1 | | |
| 7 | 2,4 | 0,10 | 0,1 | 0,08 | 0,5 | 0,2 | | |
| 8 | 2,4 | 0 | 0,1 | 0,08 | 0,5 | 0,3 | 3 min 10 s | 5 min |
| 9 | 2,4 | 0,15 | 0,1 | 0 | 0,5 | 0,15 | | |
| 10 | 2,4 | 0,15 | 0,1 | 0,05 | 0,5 | 0,15 | | |
| 11 | 2,4 | 0,15 | 0,1 | 0,08 | 0,5 | 0,15 | | |
| 12 | 2,4 | 0,15 | 0,1 | 0,1 | 0,5 | 0,15 | | |
| 13 | 2,4 | 0,15 | 0,1 | 0,15 | 0,5 | 0,15 | | |
| 14 | 2,4 | 0,15 | 0 | 0,05 | 0,5 | 0,15 | 2 min 45 s | 4 min 45 s |
| 15 | 2,4 | 0,15 | 0,05 | 0,05 | 0,5 | 0,15 | | |
| 16 | 2,4 | 0,15 | 0,1 | 0,05 | 0,5 | 0,15 | | |
| 17 | 2,4 | 0,15 | 0,05 | 0,05 | 0,5 | 0,1 | | |
| 18 | 2,4 | 0,15 | 0,05 | 0,05 | 0,3 | 0,15 | 6 min 30 s | 10 min 20 s |
| 19 | 2,4 | 0,15 | 0,05 | 0,05 | 0,4 | 0,15 | | |
| 20 | 2,4 | 0,15 | 0,05 | 0,05 | 0,5 | 0,15 | | |
| 21 | 2,4 | 0,15 | 0,05 | 0,05 | 0,6 | 0,15 | | |
| 22 | 2,4 | 0,15 | 0,05 | 0,05 | 0,7 | 0,15 | 2 min | 2 min 50 s |
| 23 | 2,4 | 0,125 | 0,1 | 0,1 | 0,5 | 0,125 | 2 min 30 s | 5 min 10 s |
| 24 | 2,4 | 0,125 | 0,05 | 0,05 | 0,5 | 0,125 | 1 min 15 s | 2 min 45 s |

**Revendications**

1. Compositions à base de polymères réticulables, pour utilisation à l'état de gels réticulés, notamment pour la fracturation hydraulique de formations souterraines, du type contenant :

un polymère de base
un agent réticulant
un tampon acide, et
une base retardée,

caractérisées en ce qu'elles contiennent de plus un agent chélatant différent des constituants du tampon acide et choisi parmi les composés contenant au moins un groupe —COOH, de préférence deux groupes —COOH, de préférence voisin(s) d'une double liaison, et la thiourée, à raison de 2-10 % par rapport au poids du polymère.

2. Compositions selon la revendication 1, caractérisées en ce que le polymère de base est un dérivé de polysaccharide, notamment une gomme guar hydroxypropylée.

3. Compositions selon la revendication 1 ou 2, caractérisées en ce que le tampon acide consiste en un mélange d'acide citrique et de citrate.

4. Compositions selon l'une quelconque des revendications 1 à 3, caractérisées en ce que l'agent chélatant consiste en un acide dicarboxylique différent de l'acide citrique.

5. Compositions selon l'une quelconque des revendications 1 à 4, caractérisées en ce que l'agent chélatant est l'acide maléique.

6. Compositions selon l'une quelconque des revendications 1 à 4, caractérisées en ce que l'agent chélatant est l'acide fumarique.

7. Compositions selon l'une quelconque des revendications 1 à 4, caractérisées en ce que l'agent chélatant est l'acide tartrique.

8. Compositions selon l'une quelconque des revendications 1 à 4, caractérisées en ce que l'agent chélatant est l'acide sulfosalicylique.

9. Compositions selon l'une quelconque des revendications 1 à 4, caractérisées en ce que l'agent chélatant est l'EDTA.

10. Compositions selon l'une quelconque des revendications 1 à 4, caractérisées en ce que l'agent chélatant appartient à la famille de l'acide isoascorbique.

11. Procédé de préparation de gel utilisable pour la fracturation hydraulique ou comme fluide de forage, caractérisé en ce que l'on mélange par pompage en continu une composition selon l'une quelconque des revendications 1 à 10 avec indifféremment une quantité adéquate d'eau douce, d'eau salée ou d'une saumure.

12. Procédé selon la revendication 11, caractérisé en ce que l'agent réticulant consiste en un ion métallique.

13. Procédé selon la revendication 11 ou 12, caractérisé en ce que l'eau utilisée pour le mélange est une eau salée ou une saumure.

14. Procédé de fracturation hydraulique et/ou de soutènement, caractérisé en ce que l'on pompe dans le puits une composition selon l'une quelconque des revendications 1 à 10, comportant éventuellement un agent de soutènement comme le sable ou analogue.

**Claims**

1. Compositions based on cross-linkable polymers, for use in the cross-linked gel state, especially for hydraulic fracturing of subterranean formations, of the type comprising :

a base polymer,
a cross-linking agent,
an acid buffer, and
a delayed base,

characterized in that they further contain a chelating agent selected from the compounds containing at least one —COOH group, and preferably two —COOH groups, preferably adjacent a double bond, and thiourea, in a quantity of 2-10 % by weight of the polymer.

2. Compositions according to claim 1, characterized in that the base polymer is a polysaccharide derivative, especially a hydroxypropylated guar gum.

3. Compositions according to claim 1 or claim 2, characterized in that the acide buffer consists of a mixture of citric acid and citrate.

4. Compositions according to any one of claims 1 to 3, characterized in that the chelating agent consists of a dicarboxylic acid.

5. Compositions according to any one of claims 1 to 4, characterized in that the chelating agent is maleic acid.

6. Compositions according to any one of claims 1 to 4, characterized in that the chelating agent is fumaric acid.

7. Compositions according to any one of claims 1 to 4, characterized in that the chelating agent is tartaric acid.

8. Compositions according to any one of claims 1 to 4, characterized in that the chelating agent is sulfosalicylic acid.

9. Compositions according to any one of claims 1 to 4, characterized in that the chelating agent is EDTA.

10. Compositions according to any one of claims 1 to 4, characterized in that the chelating agent belongs to the isoascorbic acid family.

11. A process of preparation of gel usable for hydraulic fracturing or as a drilling fluid, characterized in that a composition according to any one of claims 1 to 10 is mixed by continuous pumping indiscriminately with an appropriate quantity of fresh water, salt water or brine.

12. A process according to claim 11, characterized in that the cross-linking agent comprises a metal ion.

13. A process according to claim 11 or claim 12, characterized in that the water used for the mixture is salt water or brine.

14. A process of hydraulic fracturing and/or of propping, characterized in that a composition according to any one of claims 1 to 10, optionally comprising a proppant such as sand or the like is pumped into the well.

**Patentansprüche**

1. Zusammensetzungen auf Basis von vernetzbaren Polymeren zur Verwendung im Zustand vernetzter Gele, insbesondere für die hydraulische Sprengung von unterirdischen Formationen, enthaltend ein Basispolymer, ein Vernetzungsmittel, einen Säurepuffer und ein Verzögerungsmittel, dadurch gekennzeichnet, daß sie außerdem ein Geliermittel enthalten, ausgewählt aus der Gruppe bestehend aus Verbindungen, die mindestens eine Gruppe COOH enthalten, bevorzugt zwei Gruppen COOH, bevorzugt benachbart zu einer Doppelbindung und Thioharnstoff im Verhältnis von 2 bis 10 %, bezogen auf das Gewicht des Polymeren.

2. Zusammensetzungen nach Anspruch 1, dadurch gekennzeichnet, daß das Basispolymer ein Polysaccharidderivat, insbesondere ein hydroxypropylierter Guargummi ist.

3. Zusammensetzungen nach Anspruch 1 oder 2, dadurch gekennzeichnet, daß der Säurepuffer aus einer Mischung von Zitronensäure und Citrat besteht.

4. Zusammensetzungen nach einem der Ansprüche 1 bis 3, dadurch gekennzeichnet, daß das Geliermittel aus einer Dicarbonsäure besteht.

5. Zusammensetzungen nach einem der Ansprüche 1 bis 4, dadurch gekennzeichnet, daß das Geliermittel Maleinsäure ist.

6. Zusammensetzungen nach einem der Ansprüche 1 bis 4, dadurch gekennzeichnet, daß das Geliermittel Fumarsäure ist.

7. Zusammensetzungen nach einem der Ansprüche 1 bis 4, dadurch gekennzeichnet, daß das Geliermittel Weinsäure ist.

8. Zusammensetzungen nach einem der Ansprüche 1 bis 4, dadurch gekennzeichnet, daß das Geliermittel Sulfosalicylsäure ist.

9. Zusammensetzungen nach einem der Ansprüche 1 bis 4, dadurch gekennzeichnet, daß das Geliermittel EDTA ist.

10. Zusammensetzungen nach einem der Ansprüche 1 bis 4, dadurch gekennzeichnet, daß das Geliermittel zur Familie der Isoascorbinsäuren gehört.

11. Verfahren zur Herstellung eines Gels, das zur hydraulischen Sprengung oder als Bohrflüssigkeit verwendbar ist, dadurch gekennzeichnet, daß man eine Zusammensetzung nach einem der Ansprüche 1 bis 10 kontinuierlich durch Pumpen mischt jeweils mit einer entsprechenden Menge Süßwasser, Salzwasser oder Salzlake.

12. Verfahren nach Anspruch 11, dadurch gekennzeichnet, daß das Vernetzungsmittel ein metallisches Ion ist.

13. Verfahren nach Anspruch 11 oder 12, dadurch gekennzeichnet, daß das für die Mischung verwendete Wasser Salzlake ist.

14. Verfahren zur hydraulischen Sprengung und/oder Stütze, dadurch gekennzeichnet, daß man in den Schacht eine Zusammensetzung nach einem der Ansprüche 1 bis 10 pumpt, die gegebenenfalls ein Stützmittel wie Sand oder etwas analoges umfaßt.

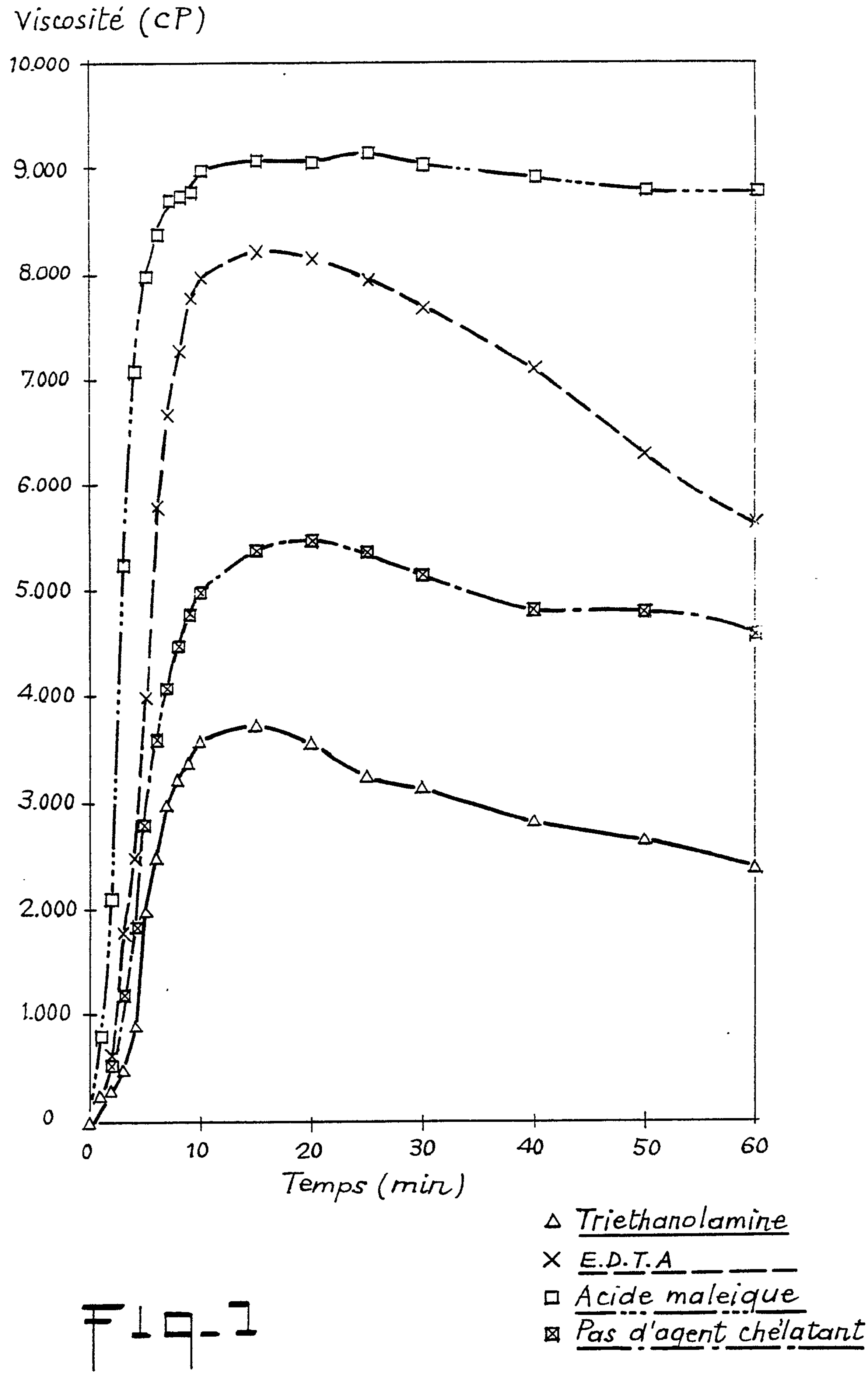
Viscosité (cP)
10.000
9.000
8.000
7.000
6.000
5.000
4.000
3.000
2.000
1.000
0
0
10
20
30
40
50
60
Temps (min)
Triethanolamine
E.D.T.A
Acide maleique
Pas d'agent chélatant

Fig-1

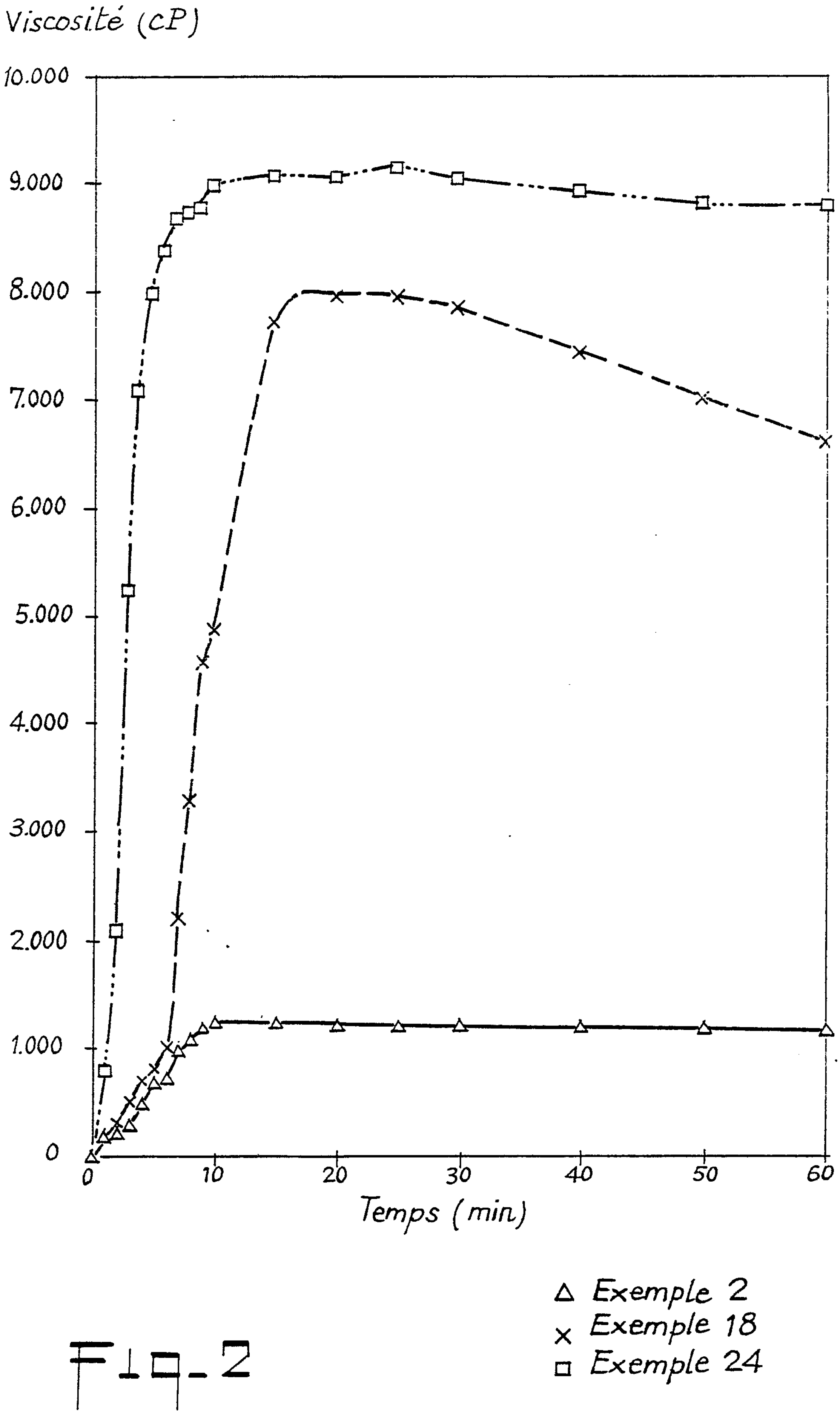
Viscosité (cP)
10.000
9.000
8.000
7.000
6.000
5.000
4.000
3.000
2.000
1.000
0
0
10
20
30
40
50
60
Temps (min)
Exemple 2
Exemple 18
Exemple 24

Fig_2